# EUROPÄISCHE PATENTANMELDUNG

(11) **EP 2 988 465 A1**
(43) Veröffentlichungstag der Anmeldung: **24.02.2016**
(21) Anmeldenummer: 14181409.5
(22) Anmeldetag: 19.08.2014
(51) Int. Cl.: H04L 29/06, H04L 29/08

(54) **Verfahren zur Übertragung eines IP-Datenpaketes zwischen Automatisierungsmodulen**

(71) Anmelder: Siemens Aktiengesellschaft, 80333 München (DE)
(72) Erfinder: Albrecht, Harald, 90475 Nürnberg (DE); Landgraf, Ingo, 90765 Fürth-Poppenreuth (DE)

(57) **Zusammenfassung**

Die vorliegende Erfindung betrifft ein Verfahren zur Übertragung eines IP-Datenpakets von einem ersten Automatisierungsmodul (101) einer modularen Steuerung (100) zu einem zweiten Automatisierungsmodul (201) der modularen Steuerung (100) über einen Rückwandbus (102) der modularen Steuerung (100), wobei das IP-Datenpaket einen Kopfbereich und einen Datenbereich umfasst, umfassend die Schritte: a.Erstellen eines Transport-Datenpakets aus einem im ersten Automatisierungsmodul (101) vorliegenden IP-Datenpaket, wobei das Transport-Datenpaket eine Auswahl der Daten des Kopfbereichs des IP-Datenpakets und den Datenbereich des IP-Datenpakets umfasst; b. Übertragen des Transport-Datenpakets über den Rückwandbus (102) zum zweiten Automatisierungsmodul (201); c.Rekonstruieren des IP-Datenpakets aus dem Transport-Datenpaket.

## Beschreibung

Die vorliegende Erfindung betrifft ein Verfahren zur Übertragung eines IP-Datenpaketes von einem ersten Automatisierungsmodul einer modularen Steuerung zu einem zweiten Automatisierungsmodul der modularen Steuerung über einen Rückwandbus.

Derartige Verfahren sind aus dem Stand der Technik bekannt. So offenbart beispielsweise das europäische Patent EP 1 179 760 B9 ein Kommunikationssystem mit einer modularen programmierbaren Steuerung, die mehrere intelligente Module und einen internen Kommunikationsbus umfasst, um die Module miteinander kommunizieren zu lassen. Um dabei gemäß des Kommunikations-Protokolls TCP/IP am internen Kommunikationsbus zu kommunizieren, hat jedes der intelligenten Module eine eigene IP-Adresse und einen TCP/IP-Stapel.

Es ist ein Nachteil des Standes der Technik, dass beispielsweise der Kommunikationsbus durch den Transport der TCP/IP-Pakete relativ stark belastet wird.

Es ist daher eine Aufgabe der vorliegenden Erfindung, eine IP-Kommunikation im Bereich einer modularen Steuerung effizienter zu machen.

Diese Aufgabe wird gelöst durch ein Verfahren gemäß Patentanspruch 1.

Dieses Verfahren ist zur Übertragung eines IP-Datenpaketes von einem ersten Automatisierungsmodul einer modularen Steuerung zu einem zweiten Automatisierungsmodul der modularen Steuerung über einen Rückwandbus der modularen Steuerung eingerichtet, wobei das IP-Datenpaket einen Kopfbereich und einen Datenbereich umfasst. Das genannte Verfahren umfasst dabei die folgenden Schritte:
a) Erstellung eines Transport-Datenpaketes aus einem im ersten Automatisierungsmodul vorliegenden IP-Datenpaket, wobei das Transport-Datenpaket eine Auswahl der Daten des Kopfbereiches des IP-Datenpaketes und den Datenbereich des IP-Datenpaketes umfasst;
b) Übertragen des Transport-Datenpaketes über den Rückwandbus zum zweiten Automatisierungsmodul;
c) Rekonstruieren des IP-Datenpaketes aus dem Transport-Datenpaket.

Dadurch, dass das Transport-Datenpaket nur eine Auswahl der Daten des Kopfbereiches des IP-Datenpaketes aufweist, ist das Transport-Datenpaket kleiner als das IP-Datenpaket und daher effizienter über den Rückwandbus zu kommunizieren. Durch die Rekonstruktion des IP-Datenpaketes im zweiten Automatisierungsmodul, nach dem Transport über den Rückwandbus, lässt sich das Datenpaket aber trotzdem wie ein gewöhnliches IP-Datenpaket weiter verarbeiten, insbesondere weiterleiten. Und dies ist möglich, obwohl das Transport-Datenpaket selbst nicht IP-kompatibel ist, d. h. das Transport-Datenpaket würde nicht von einem IP-Protokoll-Stack verstanden werden.

Unter einem IP-Datenpaket wird insbesondere ein Datenpaket gemäß dem Internet-Protokoll Version 4 (IPv4) gemäß RFC 791 oder auch gemäß dem Internet-Protokoll Version 6 (IPv6) unter anderem gemäß RFC 2460 verstanden. Weiterhin können beispielsweise auch vergleichbare Datenpakete, oder Datenpakete mit einem an das IP-Protokoll angelehnten Datenformat, als IP-Datenpakete im Sinne dieses Anspruchs verstanden werden.

Die modulare Steuerung entspricht einer Einrichtung zur Steuerung von Geräten, Maschinen, Anlagen oder Ähnlichem, welche aus mehreren Modulen besteht. Dabei können diese Module beispielsweise verschiedene Steuerungsaufgaben oder Steuerungs-Teilaufgaben zur Steuerung des Gerätes, der Maschine oder der Anlage übernehmen. Zur Kommunikation der Module untereinander umfasst die modulare Steuerung einen Rückwandbus, über welchen die Steuerungsaufgaben der verschiedenen modularen Steuerungen koordiniert werden.

Die modulare Steuerung kann beispielsweise als eine modulare speicherprogrammierbare Steuerung (z.B. eine SPS oder PLC) ausgestaltet und eingerichtet sein. Dabei kann diese beispielsweise mindestens ein zentrales Steuerungsmodul umfassen, in welchem beispielsweise ein Steuerungsprogramm abläuft oder ablaufen kann. Als weitere Module einer so genannten speicherprogrammierbaren Steuerung können Eingabe- und /Ausgabemodule (so genannte I/O-Module), Stromversorgungsmodule, Funktionsmodule, Antriebsmodule, Anschlussmodule, Kopfbaugruppen und/oder Kommunikationsmodule oder auch weitere Module vorgesehen bzw. einsetzbar sein. Zur Erfüllung bestimmter Steuerungsaufgaben kann aus den beispielsweise vorstehend genannten Modulen ein entsprechender Satz ausgewählt werden, welcher dann über den Rückwandbus verbunden zur modularen Steuerung zusammengesetzt wird.

Der Rückwandbus der modularen Steuerung kann beispielsweise als ein fest installierter Datenbus vorgesehen sein, mit welchen die einzelnen Module der modularen Steuerung jeweils verbunden werden. Weiterhin kann der Rückwandbus auch selbstaufbauend ausgestaltet sein, z.B. in der Art einer sogenannten "Daisy-Chain", wobei beispielsweise ein erstes Modul unmittelbar über einen Steckverbinder oder über eine Kabelverbindung mit einem nächsten Modul verbunden wird und dieses Modul dann ggf. wiederum unmittelbar über einen Steckverbinder oder auch über ein Kabel mit einem weiteren Modul verbindbar oder verbunden ist beziehungsweise verbunden wird. Auf diese Weise bildet sich beim Zusammenstellen der modularen Steuerung aus den Modulen über die genannten Verbindungen der Rückwandbus der modularen Steuerung heraus.

Der Rückwandbus kann dabei aktiv oder passiv ausgestaltet sein, wobei ein aktiver Rückwandbus selbst in die Kommunikation über den Rückwandbus eingreift, beispielsweise in der Art eines Netzwerkknotens. Ein passiver Rückwandbus dient als reine Datenleitung, wobei die Kommunikation über den Rückwandbus beispielsweise von einem oder mehreren der Module der modularen Steuerung gesteuert werden kann.

Der Aufbau des IP-Datenpaketes weist einen Kopfbereich - den so genannten Header - und einen Datenbereich zur Übertragung der eigentlichen Nutzdaten auf. Im Header sind diejenigen Informationen abgelegt, die zum Transport und zur ordnungsgemäßen Übertragung des IP-Datenpaketes erforderlich sind. Der Aufbau des Headers ist bei einem IPv4 in der RFC 791 bzw. bei einem Datenpaket gemäß IPv6 in der RFC 2460 definiert. Insbesondere besteht das IP-Datenpaket ausschließlich aus dem Kopfbereich und dem Datenbereich.

Das Erstellen des Transport-Datenpaketes erfolgt beispielsweise im ersten Automatisierungsmodul. Das dazu verwendete IP-Datenpaket kann beispielsweise von einer weiteren Einheit, z. B. über eine Netzwerkverbindung, an das erste Automatisierungsmodul übertragen worden sein oder auch im ersten Automatisierungsmodul erzeugt worden sein. Beim Erstellen des Transport-Datenpaketes wird eine Auswahl der Daten des Kopfbereiches des IP-Datenpakets erzeugt und diese mit dem Datenbereich des IP-Datenpaketes zum Transport-Datenpaket kombiniert. Dadurch, dass die Auswahl der Daten des Kopfbereiches des IP-Datenpaketes eine geringere Datenmenge als der Kopfbereich des IP-Datenpaketes aufweist, wird auf diese Weise das Transport-Datenpaket kleiner als es das IP-Datenpaket ist bzw. war.

Insbesondere ist das IP-Datenpaket gemäß IPv4 oder IPv6 ausgebildet und eingerichtet und die Auswahl der Daten des Kopfbereiches (Header) des IP-Datenpaketes erfolgt durch Auswahl bestimmter Datenbereiche des in der RFC 791 bzw. RFC 2460 definierten Datenbereichs des Headers. Vereinfacht gesagt werden also beim Aufbau des Transport-Datenpaketes einige Datenbereiche des Headers des IP-Datenpaketes weggelassen. Dadurch ist das Transport-Datenpaket zwar nicht mehr IP-Protokoll-kompatibel, d. h. es wird von einem IP-Protokoll-Stack nicht mehr verstanden, durch die Rekonstruktion des IP-Datenpaketes später im zweiten Automatisierungsmodul hat das auf die externe IP-Kommunikation der modularen Steuerung nur reduzierte Auswirkungen.

Unter dem Rekonstruieren des IP-Datenpaketes wird verstanden, dass das rekonstruierte IP-Datenpaket konform mit dem entsprechend verwendeten IP-Standard ist und bei einem vorgesehen Empfänger des IP-Datenpaketes dieselbe Wirkung erzeugt wie das ursprüngliche IP-Datenpaket, wenn es diesem Empfänger direkt zugeleitet worden wäre. Insbesondere kann das rekonstruierte IP-Datenpaket dem ursprünglichen IP-Datenpaket genau entsprechen.

In einer vorteilhaften Ausgestaltung kann die zur Erstellstellung des Transport-Datenpaketes gebildete Auswahl der Daten des Kopfbereiches des IP-Datenpaketes keine Daten enthalten, die einer dem IP-Datenpaket zugeordneten Prüfsumme entsprechen. Beispielsweise kann das IP-Datenpaket gemäß IPv4 ausgebildet sein und das Transport-Datenpaket gebildet werden, indem die Daten des IP-Datenpaketes ohne das Feld "Hea- der Checksum" gemäß IPv4 übernommen werden.

Weiterhin kann beispielsweise in diesem Fall vorgesehen sein, dass der Rückwandbus, bzw. die jeweilige Rückwandbus-Anschaltung der einzelnen Module, über eine eigene Sicherungsschicht verfügt. Beim Rekonstruieren des IP-Datenpaketes wird die "Header Checksum" dann erneut erzeugt und gemäß IPv4-Standard in den neuen Header des rekonstruierten IP-Datenpaketes eingefügt.

Weiterhin kann vorgesehen sein, dass vor der in der vorliegenden Beschreibung beschriebenen Rückwandbus-Kommunikation vermittels der Transport-Datenpakete, insbesondere vor dem Verfahrensschritt a) gemäß der vorliegenden Beschreibung, mindestens ein Transport-Parameter für die Übertragung des Transport-Datensatzes über den Rückwandbus festgelegt wird. Solche Transport-Parameter können einen oder mehrere Charakteristika oder Definitionen beschreiben, welche beispielsweise das Format des Transport-Datensatzes, dessen Inhalt und/oder die Rekonstruktion des IP-Datenpaketes charakterisiert oder ermöglicht.

Derartige Transport-Parameter können beispielsweise in den Modulen der modularen Steuerung bereits bei der Herstellung bzw. mit einer Firmware installiert werden bzw. in entsprechenden Software-Modulen oder Treibern enthalten sein. Weiterhin können derartige Transport-Parameter beispielsweise auch über ein Engineering oder eine Parametrierung der modularen Steuerung änderbar oder einrichtbar sein.

Insbesondere können die Transport-Parameter mehreren oder allen über den Rückwandbus verbundenen Modulen der modularen Steuerung bekannt gemacht werden, so dass die Erstellung des Transport-Datensatzes und auch die Rekonstruktion eines IP-Datensatzes von mehreren bzw. allen Modulen vorgenommen werden kann. So wird eine flexible Kommunikation gemäß des hier beschriebenen Verfahrens zwischen den Modulen der modularen Steuerung ermöglicht.

In einer vorteilhaften Ausgestaltung des hier beschriebenen Verfahrens kann vorgesehen sein, dass eine Version des verwendeten IP-Protokolls als Transport-Parameter definiert wird. So kann beispielsweise vorgesehen sein, dass als Transportparameter die Verwendung des Internet-Protokolls Version 4 (IPv4) festgelegt wird. Beim Erstellen des Transport-Datensatzes kann dann das im Header des IP-Datensatzes vorhandene Feld zur Beschreibung der Versionsnummer des IP-Protokolls weggelassen werden. Bei der Rekonstruktion des IP-Datenpaketes wird dann dieses Feld mit gesetzter Versionsnummer 4 entsprechend wieder hinzugefügt.

Entsprechendes gilt bei der Festlegung des IP-Protokolls auf IPv6 als Transport-Parameter.

Bei der Festlegung auf IPv4 über einen Transportparameter kann weiterhin die Länge des IP-Kopfbereiches (Header) des Datenpaketes als Transportparameter fixiert werden. Auf diese Weise kann das entsprechende Datenfeld (IHL) des IPv4-Headers bei der Erstellung des Transport-Datenpaketes weggelassen werden und beim Rekonstruieren des IP-Datenpaketes wieder die über den Transport-Parameter definierte Header-Länge eingefügt werden.

Entsprechendes gilt für die Definition der Länge des IP-Datenpaketes als Transportparameter beim Festlegen von IPv6 als Transportparameter.

Weiterhin kann als Transportparameter auch eine Service-Charakterisierung für die Übertragung des IP-Datenpaketes verwendet und festgelegt werden. So kann auf diese Weise beispielsweise bei einer Festlegung von IPv4 als Transportparameter weiterhin ein "Type of Service" (TOS) als weiterer Transportparameter festgelegt werden und dann das entsprechende TOS-Datenfeld des IPv4-Headers bei der Erstellung des Transport-Datenpaketes weggelassen werden und bei der Rekonstruktion des IP-Datenpaketes dann wieder entsprechend hinzugefügt werden. Entsprechendes gilt bei der Verwendung von IPv6 für das Feld "Traffic Class" des IPv6-Headers.

Allgemein kann vorgesehen sein, dass bei der Erstellung des Transport-Datenpaketes diejenigen Daten des Kopfbereichs des IP-Datenpaketes weggelassen werden, die mindestens einem der Transport-Parameter entsprechen bzw. durch diese bereits fixiert sind.

Auf diese Weise kann durch Definition spezieller Parameter für die Rückwandbus-Kommunikation der Transport eines IP-Datenpaketes über den Rückwandbus effizienter gemacht werden, insbesondere effizient komprimiert werden.

Die Festlegung der Transport-Parameter kann dabei beispielsweise fest in einem Protokoll-Stack, insbesondere einem Rückwandbus-Protokoll-Stack oder einem entsprechenden Software-Modul eines Automatisierungsmoduls fixiert sein. Dabei kann dann z.B. die IP-Kommunikation über die Transport-Datenpakete über den Rückwandbus grundsätzlich entsprechend dieser Transportparameter ablaufen. Weiterhin können die Transportparameter auch durch Engineering oder Parametrierung der Module eingerichtet oder geändert werden, wobei dann die entsprechende Kommunikation nach einer solchen Einrichtung oder Änderung entsprechend angepasst wird.

Im Rahmen der vorliegenden Beschreibung kann dies beispielsweise derart ausgestaltet sein, dass nach einer Festlegung des mindestens einen Transportparameters die genannten Verfahrensschritte a) bis c) mehrfach zyklisch ablaufen, d. h. nach Ende des Verfahrensschritts c) erneut ein Verfahrensschritt a) beim Vorliegen des nächsten IP-Datenpaketes zur Übertragung über den Rückwandbus, beginnt.

In einer vorteilhaften Ausgestaltung kann vorgesehen sein, dass vor der Erstellung des Transport-Datenpaketes aus dem im ersten Automatisierungsmodul vorliegenden IP-Datenpaket geprüft wird, ob dieses IP-Datenpaket nach der Übertragung als Transport-Datenpaket über den Rückwandbus wieder rekonstruierbar ist.

Dabei kann weiterhin vorgesehen sein, dass bei einem negativen Prüfungsergebnis, also wenn das IP-Datenpaket nach der Übertragung als Transport-Datenpaket nicht mehr wieder rekonstruierbar ist, eine Fehlermeldung oder eine Fehlernachricht ausgegeben wird. Eine solche Fehlermeldung oder Fehlernachricht kann beispielsweise an einen Absender des IP-Datenpaketes und/oder einen Benutzer der modularen Steuerung ausgegeben werden.

Bei der Festlegung von Transportparametern für die Übertragung des Transport-Datensatzes über den Rückwandbus kann dabei beispielsweise geprüft werden, ob das zu übertragende IP-Datenpaket mit den Transport-Parametern korrespondiert. So kann bei entsprechend verwendeten Transport-Parametern beispielsweise überprüft werden, ob die Version des IP-Protokolls des IP-Datenpaketes dem festgelegten Transport-Parameter entspricht. Entsprechend kann beispielsweise geprüft werden, ob die Länge des IP-Datenpaketes, die Länge des IP-Kopfbereiches und/oder eine Service-Charakterisierung bis zur Übertragung des IP-Datenpakets den jeweiligen Transportparametern entspricht.

So können die Transportparameter beispielsweise eine, im Allgemeinen sehr große, Untermenge aller theoretisch möglichen IP-Datenpakete beschreiben. Solche Datenpakete sind dann mittels der Transport-Datenpakete über den Rückwandbus der modularen Steuerung komprimiert und rekonstruierbar übertragbar. IP-Datenpakete, die den entsprechenden Transportparametern nicht entsprechen, können dann nicht vollständig rekonstruierbar über den Rückwandbus übertragen werden. Um dies einem Anwender oder Absender einer solchen IP-Nachricht zu kommunizieren, kann dann eine entsprechende Meldung ausgegeben werden.

Es kann dann vorgesehen sein, dass nicht den Transport-Parametern entsprechende Datenpakete trotzdem über den Rückwandbus übertragen werden. Weiterhin kann auch vorgesehen sein, dass nicht den Transport-Parametern entsprechende Datenpakete dann nicht über den Rückwandbus übertragen werden.

Es kann auch vorgesehen sein, dass ein nicht den Transport-Parametern entsprechendes IP-Datenpaket in ein den Transportparametern entsprechendes IP-Datenpaket umgewandelt wird und dann dieses gemäß einem in der vorliegenden Beschreibung dargestellten Verfahren über den Rückwandbus übertragen und danach rekonstruiert wird. Auch in diesem Fall kann dann z.B. weiterhin eine entsprechende Information an einen Absender des IP-Datenpakets oder einen Nutzer des Automatisierungssystems ausgegeben werden.

Die vorstehende Aufgabe wird auch gelöst von einem Automatisierungsmodul für eine modulare Steuerung, wobei das Automatisierungsmodul eine Rückwandbus-Schnittstelle zur Kommunikation über einen Rückwandbus der modularen Steuerung umfasst,
- wobei das Automatisierungsmodul zum Erstellen eines Transport-Datenpaketes aus einem IP-Datenpaket mit einem Kopfbereich und einem Datenbereich, sowie zum Ausgeben des Transport-Datenpaketes an den Rückwandbus über die Rückwandbus-Schnittstelle, ausgebildet und eingerichtet ist,
- wobei das Transport-Datenpaket weiterhin eine Auswahl der Daten des Kopfbereichs des IP-Datenpakets und den Datenbereich des IP-Datenpakets umfasst.

Dabei kann das Erstellen des Transport-Datenpaketes beispielsweise im Rahmen eines Rückwandbus-Treibers des Automatisierungsmoduls oder einer speziellen Rückwandbus-Applikation oder Übersetzungs- oder sonstigen Software-Applikation oder einer entsprechenden Hardware-Baugruppe im Automatisierungsmodul erfolgen.

Die vorliegende Aufgabe wird auch gelöst von einem Automatisierungsmodul für eine modulare Steuerung mit einer Rückwandbus-Schnittstelle zur Kommunikation über einen Rückwandbus der modularen Steuerung, wobei das Automatisierungsmodul zum Empfangen eines Transport-Datenpaketes von dem Rückwandbus über die Rückwandbus-Schnittstelle sowie zum Rekonstruieren eines IP-Datenpaketes mit einem Kopfbereich und einem Datenbereich aus dem Transport-Datenpaket ausgebildet und eingerichtet ist, wobei das Transport-Datenpaket eine Auswahl der Daten des Kopfbereichs des IP-Datenpakets und den Datenbereich des IP-Datenpakets umfasst.

Auch das Rekonstruieren des IP-Datenpakets kann beispielsweise im Rahmen eines entsprechenden Rückwandbus-Treibers oder einer Rückwandbus-Applikation bzw. eines entsprechenden Übersetzungs-Moduls oder einer entsprechenden Hardware-Baugruppe im Automatisierungsmodul erfolgen.

Weiterhin können die modulare Steuerung, die Rückwandbus-Schnittselle, der Rückwandbus, das Transport-Datenpaket, das IP-Datenpaket sowie die Auswahl der Daten, das Erstellen des Transport-Datenpakets und das Rekonstruieren des IP-Datenpakets wie im Rahmen der vorliegenden Beschreibung erläutert ausgestaltet und eingerichtet sein.

Weiterhin wird die vorstehend genannte Aufgabe auch durch ein Automatisierungsmodul gelöst, das sowohl zum Erstellen eines Transport-Datenpakets als auch zum Rekonstruieren eines IP-Datenpakets aus einem Transport-Datenpaket ausgebildet und eingerichtet ist, so dass mit einem solchen Modul sowohl das Senden als auch Empfangen entsprechender Transport-Datenpakete über einen Rückwandbus gemäß der vorliegenden Beschreibung möglich ist.

Auch eine modulare Steuerung mit einem Rückwandbus und mindestens zwei Automatisierungsmodulen gemäß der vorliegenden Beschreibung, welche über ihre jeweiligen Rückwandbus-Schnittstellen mit dem Rückwandbus gekoppelt sind, löst die vorstehend genannte Aufgabe.

Weitere vorteilhafte Ausgestaltungen finden sich in den Unteransprüchen.

Im Folgenden wird die vorliegende Erfindung beispielhaft mit Bezug auf die beiliegende Zeichnung näher erläutert.

Es zeigt:

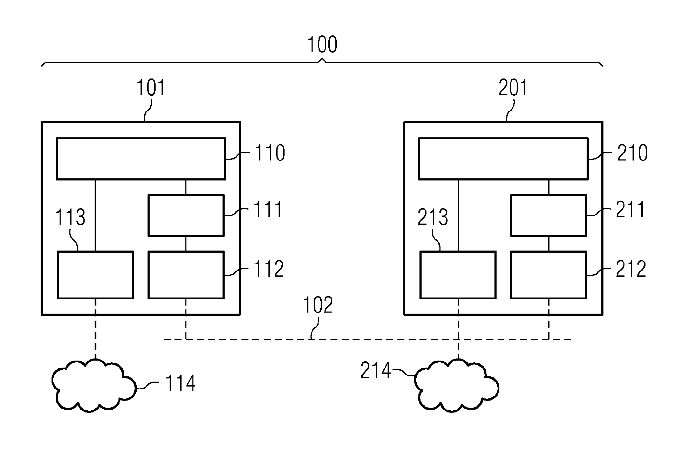

Figur 1: Beispiel für eine modulare Steuerung mit zwei über einen Rückwandbus gekoppelten Modulen.

Figur 1 zeigt eine modulare speicherprogrammierbare Steuerung 100 mit einem zentralen Steuerungsmodul (CPU) 101 und einem Kommunikationsmodul 201, welche über einen Rückwandbus 102 der modularen Steuerung 100 gekoppelt sind. Die CPU 101 weist eine externe Netzwerkschnittstelle 113 auf, welche mit einem ersten externen IP-Netz 114 verbunden ist. Zur Verarbeitung von vom IP-Netz kommenden Nachrichten weist die CPU 101 einen IP-Stack 110 auf. Um IP-Datenpakete über den Rückwandbus 102 zu übertragen, umfasst die CPU 101 ein Übersetzungsmodul 111 zur Erstellung eines Transport-Datenpakets gemäß der vorliegenden Beschreibung. Weiterhin ist in der CPU 101 eine an den Rückwandbus 102 gekoppelte Rückwandbus-Schnittstelle 112 vorgesehen, welche zumindest unter Anderem vom Übersetzungsmodul 111 Datenpakete erhält oder an dieses Datenpakete überträgt.

Im Wesentlichen entsprechend dem CPU-Modul 101 weist auch das Kommunikationsmodul 201 eine Rückwandbus-Schnittstelle 212 auf, welche Datenpakete an eine Übersetzungs-Applikation 211 des Kommunikationsmoduls 201 weitergeben kann bzw. Datenpakete von dieser erhalten kann.

Auch das Kommunikationsmodul 201 weist einen IP-Stack 210 auf, mit welchem sich IP-Datenpakete beispielsweise über ein externes Netzwerk Interface 213 des Kommunikationsmoduls 201 an ein zweites IP-Netz 214 ausgeben lassen bzw. Daten dem zweiten externen IP-Netz 214 empfangen werden können.

Zur Übertragung von IP-Datenpaketen über den Rückwandbus 102 ist in der modularen Steuerung 100 beispielsweise festgelegt, dass über den Rückwandbus 102 Datenpakete gemäß IPv4 mit einer fest vorgegebenen Länge des IP-Headers und einem fest definierten "Type of Service" übertragen werden. Weiterhin ist festgelegt, dass über den Rückwandbus dabei keine "Header Checksum" übertragen wird.

Es wird nun beispielsweise ein IP-Datenpaket vom ersten IP-Netz 114 über das Netzwerk Interface 113 des Steuerungsmoduls 101 und seinen IP-Stack 110 empfangen. In der Übersetzungs-Applikation 111 des Steuerungsmoduls 101 wird dann überprüft, ob das empfangene IP-Datenpaket den vorgegebenen Kriterien bezüglich IP-Protokoll, Header-Länge usw. entspricht. Wenn das IP-Datenpaket den vorgegebenen Transportparametern entspricht, so erfolgt im Übersetzungsmodul 111 der CPU 101 weiterhin die Erstellung eines Transport-Datenpakets, in dem die Felder "Versionsnummer", "IHL", "Header Checksum" und "Type of Service" (TOS) weggelassen werden und aus den restlichen Header-Daten sowie den Nutzdaten des IP-Datenpakets das Transportdatenpaket aufgebaut wird. Dieses wird dann an die Rückwandbus-Schnittstelle 112 und über diese an den Rückwandbus 102 ausgegeben.

Das entsprechende Transportpaket wird dann über den Rückwandbus 102 zum Kommunikationsmodul 201 übertragen und vom Rückwandbus Interface 212 des Kommunikationsmoduls 201 empfangen. Im Übersetzungsmodul 211 des Kommunikationsmoduls 201 wird dann das originale IP-Datenpaket entsprechend den gesetzten Transport-Parametern wieder rekonstruiert. Dabei wird über eine Sicherungsschicht der Rückwandbus-Kommunikation auch die entsprechende Header Checksum wieder erzeugt.

Das rekonstruierte IP-Datenpaket wird dann über den IP-Stack 210 des Kommunikationsmoduls 201 und das externe Netzwerk Interface 213 des Kommunikationsmoduls 201 an das zweite IP-Netzwerk 214 ausgegeben. Ein Empfänger des IP-Datenpakets im zweiten externen IP-Netz 214 kann dabei das rückübersetzte IP-Datenpaket in seiner Wirkung nicht von den Originalen, von der CPU 101 empfangenen IP-Datenpaket, unterscheiden. Erkennt das Übersetzungsmodul 111 in der CPU 101, dass das empfangene IP-Datenpaket in mindestens einem Kriterium nicht den festgelegten Transport-Parametern entspricht, beispielsweise eine andere Versions-Nummer des IP-Protokolls aufweist, so sendet die CPU 101 an den Absender des IP-Datenpakets eine Nachricht, dass das IP-Datenpaket über die CPU 101 nicht weiter leitbar ist. Ggf. erhält der Absender weitere Informationen über die Fehlerursache oder alternative Übertragungsmöglichkeiten.

Weiterhin kann auch vorgesehen sein, dass das Übersetzungsmodul 111 der CPU 101 bei einem nicht-Transport-Parameterkompatiblen IP-Datenpaket dieses in ein Transport-Parameterkompatibles IP-Datenpaket umwandelt und dieses dann über den Rückwandbus 102 gemäß dem vorstehend beschriebenen Verfahren überträgt. Auch in diesem Fall kann eine entsprechende Information an den Absender der Nachricht oder einen Nutzer des Automatisierungssystems 100 ausgegeben werden.

## Patentansprüche

1. Verfahren zur Übertragung eines IP-Datenpakets von einem ersten Automatisierungsmodul (101) einer modularen Steuerung (100) zu einem zweiten Automatisierungsmodul (201) der modularen Steuerung (100) über einen Rückwandbus (102) der modularen Steuerung (100), wobei das IP-Datenpaket einen Kopfbereich und einen Datenbereich umfasst,
umfassend die Schritte:
a.Erstellen eines Transport-Datenpakets aus einem im ersten Automatisierungsmodul (101) vorliegenden IP-Datenpaket, wobei das Transport-Datenpaket eine Auswahl der Daten des Kopfbereichs des IP-Datenpakets und den Datenbereich des IP-Datenpakets umfasst;
b.Übertragen des Transport-Datenpakets über den Rückwandbus (102) zum zweiten Automatisierungsmodul (201);
c.Rekonstruieren des IP-Datenpakets aus dem Transport-Datenpaket.

2. Verfahren gemäß Anspruch 1,
**dadurch gekennzeichnet,**
**dass** die zur Erstellung des Transport-Datenpakets gebildete Auswahl der Daten des Kopfbereichs des IP-Datenpakets keine Daten enthalten, die einer dem IP-Datenpaket zugeordneten Prüfsumme entsprechen.

3. Verfahren gemäß Anspruch 1,
**dadurch gekennzeichnet,**
**dass** vor dem Verfahrensschritt a. mindestens ein Transportparameter für die Übertragung des Transport-Datensatzes über den Rückwandbus (102) festgelegt wird.

4. Verfahren gemäß Anspruch 2,
**dadurch gekennzeichnet,**
**dass** der mindestens eine Transportparameter
- eine Version des IP-Protokolls,
- eine Länge des IP-Datenpakets,
- eine Länge des IP-Kopfbereichs, und/oder
- eine Service-Charakterisierung
umfasst.

5. Verfahren gemäß Anspruch 2 oder 3,
**dadurch gekennzeichnet,**
**dass** die zur Erstellung des Transport-Datenpakets gebildete Auswahl der Daten des Kopfbereichs des IP-Datenpakets keine Daten enthält, die dem mindestens einen Transportparameter entspricht.

6. Verfahren gemäß einem der Ansprüche 2 bis 4,
**dadurch gekennzeichnet,**
**dass** nach der Festlegung des mindestens einen Transportparameters die Verfahrensschritte a. bis c. mehrfach zyklisch ablaufen.

7. Verfahren gemäß einem der vorhergehenden Ansprüche,
**dadurch gekennzeichnet,**
**dass** vor der Erstellung des Transport-Datenpakets aus dem im ersten Automatisierungsmodul (101) vorliegenden IP-Datenpaket geprüft wird, ob dieses IP-Datenpaket nach der Übertragung als Transport-Datenpaket über den Rückwandbus (102) wieder rekonstruierbar ist, wobei bei negativem Prüfungsergebnis eine Fehlermeldung oder Fehlernachricht, insbesondere an einen Absender des IP-Datenpakets und/oder einen Benutzer der modularen Steuerung (100), ausgegeben wird.

8. Automatisierungsmodul (101, 201) für eine modulare Steuerung (100) mit einer Rückwandbus-Schnittstelle (112, 212) zur Kommunikation über einen Rückwandbus (102) der modularen Steuerung (100),
wobei das Automatisierungsmodul (101, 201) zum Erstellen eines Transport-Datenpakets aus einem IP-Datenpaket mit einem Kopfbereich und einem Datenbereich, sowie zum Ausgeben des Transport-Datenpakets an den Rückwandbus (102) über die Rückwandbus-Schnittstelle (112, 212) ausgebildet und eingerichtet ist,
wobei das Transport-Datenpaket eine Auswahl der Daten des Kopfbereichs des IP-Datenpakets und den Datenbereich des IP-Datenpakets umfasst.

9. Automatisierungsmodul (101, 201) für eine Modulare Steuerung (100) mit einer Rückwandbus-Schnittstelle (112, 212) zur Kommunikation über einen Rückwandbus (102) der modularen Steuerung (100),
wobei das Automatisierungsmodul (101, 201) zum Empfangen eines Transport-Datenpakets von dem Rückwandbus (102) über die Rückwandbus-Schnittstelle (112, 212) sowie zum Rekonstruieren eines IP-Datenpakets mit einem Kopfbereich und einem Datenbereich aus dem Transport-Datenpaket ausgebildet und eingerichtet ist,
wobei das Transport-Datenpaket eine Auswahl der Daten des Kopfbereichs des IP-Datenpakets und den Datenbereich des IP-Datenpakets umfasst.

10. Automatisierungsmodul (101, 201) für eine modulare Steuerung (100), wobei das Automatisierungsmodul (101, 201) sowohl gemäß Anspruch 9 als auch gemäß Anspruch 10 ausgebildet und eingerichtet ist.

11. Automatisierungsmodul gemäß einem der Ansprüche 8 bis 10,
**dadurch gekennzeichnet,**
**dass** das Automatisierungsmodul (101, 201) zur Erstellung des Transport-Datenpakets gemäß einem der Ansprüche 1 bis 7 und/oder zur Rekonstruktion des IP-Datenpakets gemäß einem der Ansprüche 1 bis 7 ausgebildet und eingerichtet ist.

12. Modulare Steuerung (100) mit einem Rückwandbus (102), umfassend mindestens zwei Automatisierungsmodule (101, 201) gemäß einem der Ansprüche 8 bis 11, die über deren jeweilige Rückwandbus-Schnittstelle (112, 212) mit dem Rückwandbus (102) gekoppelt sind.

13. Modulare Steuerung gemäß Anspruch 12,
**dadurch gekennzeichnet,**
**dass** die Modulare Steuerung (100) zur Durchführung eines Verfahrens gemäß einem der Ansprüche 1 bis 7 ausgebildet und eingerichtet ist.
